# DEMANDE DE BREVET EUROPEEN

(11) **EP 0 842 693 A1**
(43) Date de publication de la demande: **20.05.1998**
(21) Numéro de dépôt: 97402726.0
(22) Date de dépôt: 14.11.1997
(51) Int. Cl.: B01D 53/94

(54) **Système et procédé de dépollution de gaz d'échappement**

(30) Priorité: 19.11.1996 FR 9614185
(71) Demandeur: Institut Français du Pétrole, 92852 Rueil-Malmaison Cedex (FR)
(72) Inventeur: Castagna, Franck, 92500 Rueil-Malmaison (FR); Hayrault, Pascal, 92500 Rueil-Malmaison (FR); Jeudy, Eric, 78260 Achères (FR)

(57) **Abrégé**

- La présente invention a pour objet un système de dépollution des gaz d'échappement issus d'un moteur (1) à combustion interne à allumage commandé, comprenant au moins un premier moyen (4) de traitement des gaz tel un catalyseur de type trois voies disposé dans la ligne d'échappement (2). Le système selon l'invention comprend en outre un deuxième moyen (3), placé en amont dudit premier moyen (4) relativement au sens de propagation des gaz dans la ligne d'échappement (2), destiné à éliminer les inhibiteurs de la réaction catalytique opérée par le premier moyen, ce qui permet d'abaisser la température à partir de laquelle les polluants sont éliminés par le premier moyen (4).
- Plus précisément, ledit deuxième moyen (3) peut être destiné à éliminer l'acétylène présent dans les gaz d'échappement.

## Description

La présente invention concerne le domaine de la dépollution des gaz d'échappement émis notamment par des véhicules ayant des moteurs à allumage commandé.

Dans la plupart des pays industrialisés, des normes de plus en plus sévères sont en vigueur au sujet des rejets de polluants à l'atmosphère par les véhicules motorisés. Les polluants visés par ces réglementations sont notamment l'oxyde de carbone (CO), les oxydes d'azote (NO_{X}) et différents hydrocarbures imbrûlés.

Les systèmes connus de dépollution peuvent être des catalyseurs d'oxydo-réduction tels que des catalyseurs trois voies placés dans la ligne d'échappement des véhicules. Le problème posé par ces systèmes est qu'ils ne sont efficaces qu'à partir d'une certaine température des gaz d'échappement, généralement de l'ordre de 300°C.

A froid, la plupart des catalyseurs connus ne retiennent donc pas tous les polluants et notamment pas les hydrocarbures totalement ou partiellement imbrûlés qui, de ce fait, sont rejetés en grande quantité dans l'atmosphère. On sait en effet que plus de 80% des hydrocarbures imbrûlés sont émis pendant les deux premières minutes d'un cycle normalisé d'évaluation des émissions de polluants.

Différentes voies sont donc en cours d'exploration pour éliminer les polluants à froid c'est-à-dire depuis le démarrage du véhicule jusqu'au moment où les gaz d'échappement atteignent environ 300°C, moment où les catalyseurs classiques s'amorcent.

La demande de brevet EP-A1-0 691 459 illustre un système de dépollution comprenant un catalyseur trois voies intercalé entre un catalyseur de polymérisation des hydrocarbures placé en amont et un adsorbeur d'hydrocarbures disposé en aval. Ce système permet de transformer les hydrocarbures de faible poids moléculaire c'est-à-dire de petite taille. en hydrocarbures à plus haut poids moléculaire. Ainsi ces derniers sont plus facilement piégés au niveau de l'adsorbeur d'hydrocarbures.

Dans le document DE 4326121 un adsorbant est prévu afin de "nettoyer" les gaz d'échappement des polluants tout au long de l'activité catalytique.

Le problème avec de tels systèmes est qu'ils n'influent pas sur la mise en route du catalyseur trois voie. Ils permettent uniquement soit d'augmenter la quantité des hydrocarbures piégés, pendant un certain laps de temps, soit de prolonger la durée de vie du catalyseur. Rien n'est prévu dans cet art antérieur pour résoudre le problème du démarrage à froid, lorsque les gaz d'échappement ne sont pas assez chauds pour amorcer le catalyseur.

On connaît aussi des lignes d'échappement équipées d'un premier pot catalytique, dit de light-off, placé dans la ligne d'échappement au plus près du moteur, qui s'amorce à une première température des gaz d'échappement en sortie du moteur. Un second pot catalytique est disposé derrière le premier, et s'amorce à une deuxième température supérieure à ladite première température.

Des problèmes liés à l'usure du catalyseur de light-off apparaissent généralement assez rapidement sur de telles lignes d'échappement.

Par ailleurs dans les systèmes connus qui utilisent un adsorbeur d'hydrocarbures, celui-ci est destiné à piéger les hydrocarbures en attendant que les gaz d'échappement deviennent assez chauds pour amorcer le catalyseur d'oxydation classique.

La présente invention procède d'une démarche différente puisqu'elle vise à amorcer le catalyseur trois voies plus tôt que dans les systèmes connus. En d'autres termes, l'invention vise à améliorer les performances du catalyseur trois voies notamment à basses températures. Il ne s'agit pas d'une action permanente, a long terme mais d'un effet plus limité qui n'existe qu'au dessous d'un certain seuil de température des gaz d'échappement.

Cet effet ainsi que d'autres sont atteints grâce à un système de dépollution des gaz d'échappement issus d'un moteur à combustion interne à allumage commandé, comprenant au moins un premier moyen de traitement des gaz tel un catalyseur de type trois voies disposé dans la ligne d'échappement.

Selon l'invention, le système de dépollution comprend en outre un deuxième moyen, placé en amont dudit premier moyen relativement au sens de propagation des gaz dans la ligne d'échappement, destiné à éliminer les inhibiteurs de la réaction chimique catalytique opérée par le premier moyen, ce qui permet d'abaisser la température à partir de laquelle les polluants sont éliminés par le premier moyen.

Plus particulièrement, le deuxième moyen est destiné à éliminer les alcynes présents dans les gaz d'échappement. L'acétylène est plus particulièrement visé par l'invention. C'est en effet le composé le plus présent dans les alcynes.

De façon avantageuse, le deuxième moyen d'élimination des alcynes agit dans une plage de température des gaz d'échappement comprise entre 200°C et 300°C.

Selon l'un des modes de réalisation de l'invention, le deuxième moyen permet d'hydrogéner les alcynes et notamment l'acétylène présent dans les gaz d'échappement.

Le deuxième moyen peut être par exemple un catalyseur contenant essentiellement du palladium.

Conformément à un autre mode de réalisation de l'invention, le deuxième moyen comprend un adsorbant de l'un au moins des inhibiteurs de la réaction catalytique réalisée par ledit premier moyen.

De façon particulière, le deuxième moyen peut comprendre un adsorbant d'un alcyne tel l'acétylène. L'adsorbant peut être une zéolithe dopée au palladium.

L'invention vise en outre un procédé de dépollution de gaz d'échappement issu d'un moteur à combustion interne à allumage commandé comprenant une catalyse opérée dans la ligne d'échappement.

Conformément à l'invention, le procédé consiste en outre à éliminer les inhibiteurs de la réaction catalytique, afin d'abaisser la température à partir de laquelle les polluants sont éliminés par catalyse.

Avantageusement, on élimine les alcynes présents dans les gaz d'échappement en amont de la catalyse.

Selon l'un des modes de réalisation de l'invention, le procédé consiste à hydrogéner les alcynes et notamment l'acétylène présent dans les gaz d'échappement en amont de ladite catalyse.

A titre d'exemple, on utilise un catalyseur contenant essentiellement du palladium pour hydrogéner les alcynes et notamment l'acétylène.

De façon spécifique, on cherche à éliminer les constituants des gaz d'échappement qui ont un effet inhibiteur à des températures inférieures à 300°C sur la réaction catalytique opérée par le premier moyen.

Selon un autre mode de réalisation de l'invention, l'élimination des inhibiteurs de la catalyse consiste en une adsorption des alcynes et notamment de l'acétylène présent dans les gaz d'échappement.

A cet effet, une zéolithe dopée au palladium peut être utilisée.

D'autres détails, avantages et caractéristiques liés à la présente invention apparaîtront mieux à la lecture de la description donnée ci-après faite en référence aux dessins annexés sur lesquelles :
- la fig. 1 est un schéma simplifié d'une ligne d'échappement selon l'invention:
- la fig. 2 est un ensemble de courbes montrant l'effet d'un catalyseur d'hydrogénation de l'acétylène sur l'amorçage d'un catalyseur trois voies.

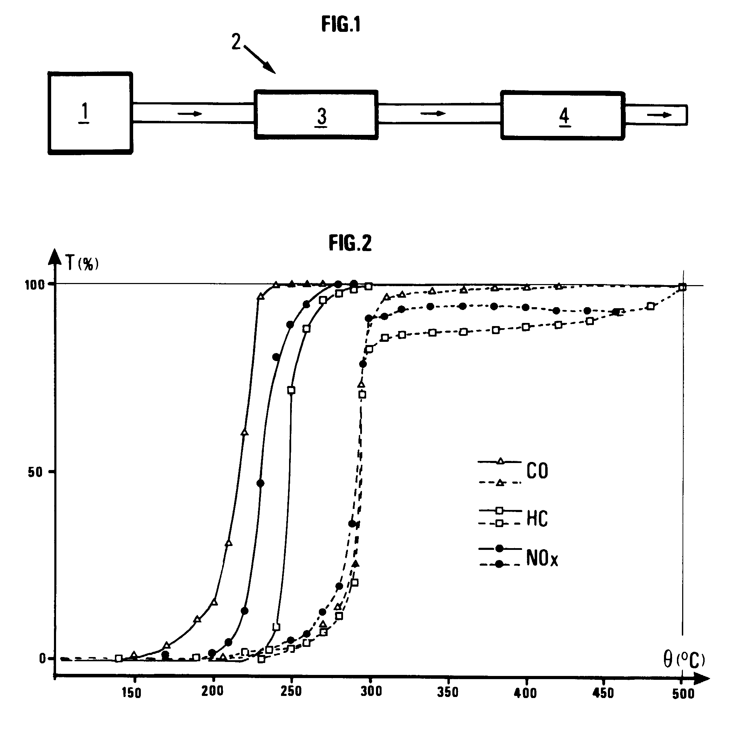

La fig. 1 illustre de façon particulièrement simple une ligne d'échappement ayant un système de dépollution selon l'invention.

Le moteur, de préférence à allumage commandé, est référencé 1. La ligne d'échappement 2 comprend essentiellement un premier moyen de traitement des gaz 4, tel un catalyseur trois voies, ce qui est connu en soi.

Selon l'invention, un deuxième moyen 3 est placé en amont dudit premier moyen relativement au sens de propagation des gaz dans la ligne d'échappement 2. Les flèches indiquent ce sens d'écoulement.

Le deuxième moyen a pour fonction d'éliminer les inhibiteurs de la réaction chimique catalytique opérée dans le premier moyen 4. Ainsi, comme l'illustrent les courbes de la fig. 2, la température à partir de laquelle le premier moyen réagit, est plus basse que dans l'art antérieur. En d'autres termes, les polluants sont éliminés, ici oxydés, par le premier moyen dès que les gaz d'échappement atteignent une température donnée, inférieure à la température d'amorçage habituelle. Les courbes qui seront commentées ci-après permettent d'illustrer les gains ainsi escomptés.

De façon plus précise, on cherche selon l'invention à ce que le deuxième moyen 3 élimine les alcynes et plus particulièrement l'acétylène qui, sinon, arriverait sur le premier moyen 4. Il a en effet été montré par exemple dans l'article intitulé "Inhibition of post-combustion catalysts by alkynes." de G. Mabilon, D. Durand et P. Courty publié dans "Catalysis and Automotive Pollution control III" vol. 96, en 1995, que l'acétylène (notamment) inhibe les différentes réactions catalytiques.

L'élimination de l'acétylène selon l'invention va par conséquent permettre l'amorçage du catalyseur trois voies plus tôt qu'auparavant.

Dans des conditions courantes, l'élimination de l'acétylène est préférentiellement opérée par le moyen 3 entre 200°C et 300°C : cette plage étant toutefois donnée à titre illustratif.

Autrement dit, il s'agit selon l'invention d'empêcher le passage d'acétylène notamment) sur le catalyseur trois voies 4 jusqu'à une température de 300°C environ pour empêcher le phénomène d'inhibition précité. L'acétylène étant absent du gaz passant sur le moyen 4 celui-ci va s'amorcer à plus basse température vers 220-250°C, d'où un gain notable. L'effet obtenu selon l'invention est donc de nature chimique ; c'est un effet avantageusement limité à une certaine plage de température.

L'élimination de l'acétylène par le moyen 3 peut être réalisée de plusieurs façons :

Selon l'un des modes de réalisation de l'invention, le moyen 3 permet d'hydrogéner l'acétylène présent dans les gaz d'échappement, à la sortie du moteur 1. Les gaz d'échappement d'un moteur à allumage commandé contenant de l'hydrogène, le moyen 3 peut remplir cette fonction d'hydrogénation.

Des catalyseurs contenant principalement du palladium pourraient être utilisés à cette fin. Rappelons qu'un tel catalyseur placé en amont du catalyseur connu, n'a pas besoin d'être un bon catalyseur d'oxydation. Il doit être avant tout capable d'hydrogéner l'acétylène notamment en-dessous de 300°C.

A titre illustratif un catalyseur tel que décrit dans l'un des brevets FR 2 720 956, FR 2 720 957 ou FR 2 721 019 délivrés au nom de la demanderesse peut être ici utilisé.

Une autre façon d'empêcher l'acétylène de passer sur le moyen 4 peut consister à faire passer les gaz d'échappement (en amont du moyen 4) sur un adsorbant ayant la propriété n'adsorber tout l'acétylène présent, à une température inférieure à 300°C.

De façon différente de l'art antérieur, il ne s'agit pas ici d'adsorber longtemps pour différer dans le temps l'arrivée des polluants sur le catalyseur trois voies 4. Il s'agit selon l'invention d'adsorber plus tôt l'acétylène c'est-à-dire pour des températures inférieures à 300°C par exemple, qui est la température habituelle d'amorçage des catalyseurs trois voies. Ceci permet donc d'amorcer plus tôt le catalyseur trois voies.

A titre d'exemple une zéolithe dopée au palladium pourrait être utilisée.

Les courbes de la figure 2 font clairement apparaître l'amélioration apportée par l'invention.

Ces courbes montrent le taux de conversion T de différents constituants des gaz d'échappement en fonction de la température θ des gaz d'échappement.

Sur cette figure apparaissent deux séries de courbes : l'une en pointillés concerne l'art antérieur ; tandis que la série de courbes en traits pleins est relative à la présente invention.

Dans chaque série. les traits accompagnés de triangles concernent les émissions de CO; les traits avec des carrés sont relatifs aux émissions d'hydrocarbures tandis que les traits ayant des points noirs concernent les émissions d'oxyde d'azote (NOₓ).

Les courbes en pointillés montrent une conversion globale supérieure à 50% pour des températures supérieures à 300°C. Il y a donc amorçage du catalyseur 4 à partir de cette température. Les courbes relatives à chaque constituant réagissant sensiblement de la même façon, l'amorçage est hien réalisé à partir d'une température donnée. Selon ces courbes, l'amorçage a lieu vers 300°C.

Selon l'invention la conversion augmente vers 230°C : 210°C pour le CO ; 230°C pour les hydrocarbures et 250°C pour les oxydes d'azote. Ceci signifie que le catalyseur 4 devient actif dès 230°C.

L'invention permet donc un abaissement de la température d'amorçage du catalyseur, vis-à-vis de l'art antérieur.

Connaissant les fortes émissions de polluants à froids. lorsque le catalyseur classique d'oxydo-réduction n'est pas encore actif, la présente invention est une solution originale tout à fait appropriée. Elle représente un moyen d'atteindre les futures limites d'émissions autorisées. En outre , les propositions envisagées pour ces futures normes prévoient à nouveau une baisse des émissions.

Le tableau ci-dessus rappelle en ce sens les propositions de la Commission Européenne pour les années 200 et 2005, pour les véhicules à moteur à allumage commandé. Ainsi, les émission de HC et de Noₓ devraient être divisées par deux.

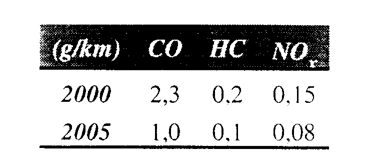

La présente invention permet d'atteindre les plus faibles niveaux envisagés.

## Revendications

1. Système de dépollution des gaz d'échappement issus d'un moteur (1) à combustion interne à allumage commandé, comprenant au moins un premier moyen (4) de traitement des gaz tel un catalyseur de type trois voies disposé dans la ligne d'échappement (2), caractérisé en ce qu'il comprend en outre un deuxième moyen (3), placé en amont dudit premier moyen (4) relativement au sens de propagation des gaz dans la ligne d'échappement (2), destiné à éliminer les inhibiteurs de la réaction chimique catalytique opérée par le premier moyen, ce qui permet d'abaisser la température à partir de laquelle le premier moyen commence à éliminer les polluants.

2. Système de dépollution selon la revendication 1, caractérisé en ce que ledit deuxième moyen (3) est destiné à éliminer les alcynes présents dans les gaz d'échappement.

3. Système selon la revendication 2, caractérisé en ce que ledit deuxième moyen (3) est destiné à éliminer l'acétylène présent dans les gaz d'échappement.

4. Système selon l'une quelconque des revendications précédentes, caractérisé en ce que ledit deuxième moyen (3) agit dans une plage de température des gaz d'échappement comprise entre 200°C et 300°C.

5. Système de dépollution selon l'une quelconque des revendications précédentes, caractérisé en ce que ledit deuxième moyen (3) permet d'hydrogéner les alcynes et notamment l'acétylène présent dans les gaz d'échappement.

6. Système de dépollution selon la revendication 5. caractérisé en ce que ledit deuxième moyen (3) est un catalyseur contenant essentiellement du palladium.

7. Système de dépollution selon l'une quelconque des revendications 1 à 4, caractérisé en ce que ledit deuxième moyen (3) comprend un adsorbant de l'un au moins des inhibiteurs de la réaction catalytique réalisée par ledit premier moyen.

8. Système de dépollution selon la revendication 7, caractérisé en ce que ledit deuxième moyen (3) comprend un adsorbant d'un aclyne.

9. Système selon la revendication 8, caractérisé en ce que ledit deuxième moyen (3) comprend un adsorbant de l'acétylène.

10. Système de dépollution selon la revendication 8 ou la revendication 9, caractérisé en ce que ledit deuxième moyen (3) comprend une zéolithe dopée au palladium.

11. Procédé de dépollution de gaz d'échappement issu d'un moteur (1) à combustion interne à allumage commandé comprenant une catalyse opérée dans la ligne d'échappement (2), caractérisé en ce qu'il consiste en outre à éliminer les inhibiteurs de la réaction chimique catalytique, afin d'abaisser la température à partir de laquelle les polluants sont éliminés par catalyse.

12. Procédé de dépollution selon la revendication 11, caractérisé en ce que l'on élimine les alcynes présents dans les gaz d'échappement en amont de la catalyse.

13. Procédé de dépollution selon l'une quelconque des revendications 11 ou 12, caractérisé en ce qu'il consiste à hydrogéner les alcynes et notamment l'acétylène présent dans les gaz d'échappement en amont de la catalyse.

14. Procédé de dépollution selon la revendication 13, caractérisé en ce que l'on utilise un catalyseur (3) contenant essentiellement du palladium pour hydrogéner les alcynes notamment l'acétylène.

15. Procédé de dépollution selon la revendication 11, caractérisé en ce que l'on traite les constituants inhibiteurs la réaction catalytique à des températures inférieures à 300°C.

16. Procédé de dépollution selon l'une quelconque des revendications 11 ou 12, caractérisé en ce que l'élimination consiste en une adsorption des alcynes et notamment de l'acétylène présent dans les gaz d'échappement.

17. Procédé de dépollution selon la revendication 15 ou 16, caractérisé en ce que l'on utilise une zéolithe dopée au palladium.
